# EUROPEAN PATENT APPLICATION

(11) **EP 4 242 039 A1**
(43) Date of publication of application: **13.09.2023**
(21) Application number: 22161677.4
(22) Date of filing: 11.03.2022
(51) Int. Cl.: B60L 50/50, B60L 50/71, B60L 50/72, B60L 50/75, B60L 58/40

(54) **A SYSTEM, A METHOD OF CONTROLLING A SYSTEM, AND A VEHICLE COMPRISING A SYSTEM**

(71) Applicant: VOLVO TRUCK CORPORATION, 405 08 Göteborg (SE)
(72) Inventor: ARYA, Pranav, 437 42 Lindome (SE); LINDBERG, Johan, 415 33 Göteborg (SE)
(74) Representative: Kransell & Wennborg KB

(57) **Abstract**

The present disclosure relates to a system (20) for a vehicle (10), said system comprising at least a first fuel cell system (30) and a second fuel cell system (40), said first fuel cell system having at least one fuel cell (37) and a compressor (32) disposed in a cathode side of the first fuel cell system and arranged upstream the at least one fuel cell; wherein the first fuel cell system further comprises a controllable flow control valve (33) configured to direct compressed air to any one the at least one fuel cell and a separate fluid conduit (39) connectable to any one of a compressed air device and an exhaust outlet; said second fuel cell system having at least one corresponding fuel cell (47) and a corresponding compressor (42) disposed in a cathode side of the second fuel cell system and arranged upstream the at least one corresponding fuel cell; wherein the second fuel cell system further comprises a corresponding controllable flow control valve (43) configured to direct compressed air to any one the at least one corresponding fuel cell and a corresponding separate fluid conduit (49) connectable to any one of the compressed air device and the exhaust outlet.

## Description

### TECHNICAL FIELD

The present disclosure relates to a system for a vehicle, the system having at least a first fuel cell system and a second fuel cell system. The present disclosure also relates to a method of controlling a system, and a vehicle comprising such a system. Although the disclosure will mainly be directed to a vehicle in the form of a truck using any one of a battery system and a fuel cell system for generating electric power to an electric traction motor, the disclosure may also be applicable for other types of vehicles using a fuel cell system for generating electric power, such as e.g. a hybrid vehicle comprising an electric machine as well as an internal combustion engine for propulsion.

### BACKGROUND

The propulsion systems of vehicles are continuously developed to meet the demands from the market. A particular technical area of vehicle propulsions systems relates to the emission of environmentally harmful exhaust gases. Therefore, other more environmentally friendly alternatives compared to conventional internal combustion engines are evaluated and implemented in vehicles. One example of such alternatives is the use of one or more electric machines for propelling the vehicle, where electric power to the one or more electric machines is generated by at least one fuel cell system.

One of the more important features of electric vehicles relates to their capability to capture kinetic energy from braking and convert it electrically to be stored into the battery system and used for providing propulsive power or for the basic energy needs of supplementary electrical systems.

In comparison to a vehicle propelled solely by an internal combustion engine (ICE), a vehicle powered by a fuel cell system and one or more electric machine may occasionally face challenges with obtaining adequate auxiliary braking. For an ICE operated vehicle, the auxiliary braking can be provided by means of a retarder or by so called engine braking. However, for an electric vehicle, the auxiliary braking functionality may sometimes be a dimensioning factor for the components making up the powertrain system of the vehicle, in particular for the cooling system of the powertrain system. This is at least partly due to the cooling capacity of the cooling system.

By way of example, a heavy-duty electric vehicle may often be subject to braking/retardation for long periods, while driving downhill along a route. In electric vehicles, this braking/retardation may generally be carried out by braking using an electric machine which generates power and subsequently charges the batteries of the vehicle. If the braking/retardation periods are long-lasting and extensive, the batteries will eventually become fully charged and cannot no longer provide the required brake power. In such cases, the brake system may activate or operate a brake resistor which is configured to handle the excessive generated heat once the batteries are fully charged. The resistor is heated up using the power produced from the electric machines. For thermal management reasons, the brake resistors need to be cooled during operation of the vehicle.

As a consequence, any auxiliary braking of the vehicle may generally cause the cooling system of the vehicle to handle high levels of excessive energy.

It would be desirable to provide an improved energy management system for managing any excessive energy generated during operation of an electric vehicle comprising at least a fuel cell system for powering one or more electric machines.

### SUMMARY

It is thus an object of the present disclosure to at least partially overcome the above-described deficiencies. This object is achieved by a system according to claim 1. The object is also achieved by the other independent claims. The dependent claims are directed to advantageous embodiments of the disclosure.

According to a first aspect, there is provided a system for a vehicle. The system comprises at least a first fuel cell system and a second fuel cell system. The first fuel cell system comprises at least one fuel cell and a compressor disposed in a cathode side of the first fuel cell system. The compressor is arranged upstream the at least one fuel cell. The first fuel cell system further comprises a controllable flow control valve configured to control supply of compressed air from the compressor to any one of the at least one fuel cell and a separate fluid conduit connectable to any one of a compressed air device and an exhaust outlet. The second fuel cell system comprises at least one corresponding fuel cell and a corresponding compressor disposed in a cathode side of the second fuel cell system. The second compressor is arranged upstream the at least one corresponding fuel cell. The second fuel cell system further comprises a corresponding controllable flow control valve configured to control supply of compressed air from the corresponding compressor to any one of the at least one corresponding fuel cell and a corresponding separate fluid conduit connectable to any one of the compressed air device and the exhaust outlet. Further, the controllable flow control valve and the corresponding controllable flow control valve are operable responsive to an operational state of any one of the first and second fuel cell systems.

Hereby, the flow control valves are arranged and configured to regulate routing of compressed air from the compressors to the corresponding fuel cell cells (generally forming corresponding fuel cell stacks) and/or to any one of the compressed air device and the exhaust outlet. In particular, the valves can also allow the system to control a proportion of the compressed air to the fuel cell(s) and the compressed air device / exhaust outlet. Typically, the controllable flow control valve and the corresponding controllable flow control valve are collectively operable responsive to the operational state of any one of the first and second fuel cell systems. By collectively controlling the valves, the valves are arranged and configured to be controlled in a coordinated manner by a control unit, including, but not limited to, simultaneous control of the valves, variable control of the valves, sequential control of the valves as well as selective control of the valves on the basis of the operational states (e.g. loads and/or power levels) of the fuel cell systems.

The proposed system also contributes to a dynamic, yet efficient and versatile way of managing energy dissipation generated during operation of the vehicle, e.g. in response to a change in fuel cell load, due to a braking demand for the vehicle and/or an operation of the vehicle. Hereby, it becomes possible to control the compressors of a dual fuel cell system so as to provide an improved and versatile power absorption on the basis of the operational state(s) of the vehicle, e.g. during a braking demand, including an ongoing braking event or a predicted braking event, thus aiding in the braking process. To this end, the proposed system provides for increasing the braking capability of a fuel cell electric vehicle as well as improving the durability/lifetime of the fuel cell systems in a fuel cell electric vehicle.

Thus, the system with the valves may also contribute to a dynamic control of distributing compressed air from the compressors to e.g. a compressed air device in the form of brake resistor or air storage tank so as to better managing excessive energy, while ensuring an adequate operation of the fuel cells of each fuel cell system. This is provided at least partly by supplying compressed air to the fuel cells on the basis of predicted and/or current load on the fuel cell systems.

In particular, by the provision of operating the valves on the basis of an operational state of any one of the first and second fuel cell systems, the controllable valves are capable of controlling supply of compressed air such that one of the corresponding compressors supply compressed air to a corresponding fuel cell and another one of the compressors supply compressed air to any one of the compressed air device and exhaust outlet. As such, the proposed system also provides for safeguarding that a supply of compressed air can performed in a controlled manner on the basis of the operation of the fuel cell systems.

The operational state may be indicative of a fuel cell system load on any one of the first and second fuel cell systems. The fuel cell system load on a fuel cell system generally corresponds to, or reflects, a power level of the fuel cell system. The data may refer to any one of a current fuel cell system load and a predicted fuel cell system load on any one of the fuel cell systems. The various states, power levels and loads of a fuel cell system, such as a high load, an intermediate load, a low load and no load, may generally be determined by using thresholds levels. Such thresholds level can be predetermined thresholds or dynamically defined thresholds. By way of example, such thresholds levels can be derivable from a look-up table stored in a memory of the control unit. Other options are also conceivable depending on type of vehicle, system and control unit.

The proposed system is particularly useful when there is a need for absorbing excessive energy from a vehicle braking event. In this context, it has been realised that fuel cell electric vehicles generally need additional devices (such as retarders) or sufficiently dimensioned batteries to absorb braking energy generated while driving downhill. Retarders may often result in wastage of energy whereas bigger batteries may result in higher vehicle weight and oversizing of the energy storage system to meet just one requirement.

The proposed system may also allow for recuperating energy more effectively without oversizing the battery/energy storage system of the vehicle. Excessive electrical energy may typically be generated by operating an electric traction machine of the vehicle in a generator mode for generating electrical energy during the regenerative braking event of the vehicle. A conventional electric machine may be operable both in a traction mode and in a generator mode.

Thus, the system with at least two fuel cell systems having corresponding compressors can also be used for improving the capabilities of the vehicle to manage recuperation energy generated in the electric traction machine operating in the generator mode during the breaking demand, such as during a braking event or in the preparations of an upcoming braking event. Such excessive energy may thus be used to pressurize the air by the compressors by using the electrical energy to power the motors driving the compressors, whilst the system is capable of controlling the distribution of the compressed air to the fuel cell(s) and the compressed air device (or exhaust conduit), thereby increasing the general efficiency of the system of the vehicle.

The braking demand generally refers to an energy dissipation situation where there is a need for managing excessive energy generated due a predicted or prevailing braking operation. Hence, the term braking demand may refer to any one of a current braking demand and a predicted braking demand. To this end, according to at least one embodiment, the compressors are arranged to operate from recuperation of brake energy from the braking event. As such, the compressors are arranged to absorb energy generated from the braking event.

One advantage with a system having at least two fuel cell systems with corresponding compressors is that the capabilities of the vehicle to absorb energy may be extended. Such system may also allow for using a compressed air device, such as a brake resistor, of a larger size. In particular, by providing a system with at least two fuel cell systems having corresponding compressors disposed in corresponding air inlet conduits of the corresponding fuel cell systems and in fluid communication with corresponding fuel cell(s) and the compressed air device, it becomes possible to improve the freedom and flexibility of the system. By way of example, the fuel cell(s) of one of the fuel cell systems may be used for providing power to the vehicle, while the fuel cell(s) of the other fuel cell system can be set in an inactive mode, whereby the compressor of the other fuel cell system is operated / used to dissipate excess electrical energy generated in or from the vehicle, e.g. due to a braking demand. Accordingly, the fuel cell system that is shut down, i.e. its fuel cells are set in a non-operating mode, is operating in an absorbing energy mode (means only compressor is running), whereby its corresponding control valve can be controlled to fully direct compressed air towards the compressed air device or exhaust conduit.

Each one of the compressors may be provided in several different configurations. Typically, each one of the compressors may be an electrically operated compressor. By way of example, each one of compressors is drivingly connected to a corresponding electric motor. The compressor is thus powered by the electric motor. The electric motor is operable from any source of electrical energy, including recuperated energy from braking, electrical energy from a battery system and electrical energy from one or more fuel cells.

The controllable flow control valve and the corresponding controllable flow control valve may be operable in response to a change in any one of a load or power level of the at least one fuel cell of the first fuel cell system and a load or power level of the at least one corresponding fuel cell of the second fuel cell system.

The controllable flow control valve and the corresponding controllable flow control valve may be operable to control supply of compressed air to the at least one fuel cell and the at least one corresponding fuel cell, respectively, when the at least one fuel cell of the first cell system and the at least one corresponding fuel cell of the second fuel cell system are operated to deliver power to the vehicle. Hereby, the same compressors can be used to provide air to the fuel cells when the fuel cell systems are delivering power and the same compressors can be used to dissipate electrical energy, e.g. absorbing excessive electrical energy generated during the braking event.

Further, when the at least one fuel cell of the first cell system and the at least one corresponding fuel cell of the second fuel cell system are both operated to deliver power to the vehicle, the controllable flow control valve and the corresponding controllable flow control valve may be further operable to control supply of compressed air to the separate fluid conduit and the corresponding separate fluid conduit if the first and second fuel cell systems are operated at power levels below a threshold level. One example of a threshold level may be a minimum power level. Hereby, it become possible to minimize degradation of the fuel cells. Moreover, such configuration may allow for reducing the load fluctuations of the fuel cell systems and hence the degradations.

Typically, when the at least one fuel cell of the first cell system is operated in a non-operational state and the at least one corresponding fuel cell is operated to deliver power to the vehicle, the controllable flow control valve may be controlled to supply compressed air to the separate fluid conduit, while the corresponding controllable flow control valve may be operable to control supply of compressed air to the at least one corresponding fuel cell of the second fuel cell system. Such control of the system allows for further improving the freedom and flexibility of the system.

The controllable flow control valve and the corresponding controllable flow control valve may be operable to control supply of compressed air to the separate fluid conduit and the corresponding separate fluid conduit, respectively, when the at least one fuel cell of the first cell system and the at least one corresponding fuel cell of the second fuel cell system are operated in corresponding non-operational states. Thereby, the system is operable to use both compressors to consume maximum power and route the air flow away from the corresponding fuel cells.

The controllable flow control valve and the corresponding controllable flow control valve may be operable to control supply of compressed air to the separate fluid conduit and the corresponding separate fluid conduit, respectively, in response to a determined need for dissipating electrical energy.

According to at least one example embodiment, at least one of the separate fluid conduit and the corresponding separate fluid conduit may be connected to a compressed air device in the form of a brake resistor. Thereby, the system is capable of allowing the compressed air from the compressors of the first and second fuel cell system to cool the brake resistor during a braking event of the vehicle.

According to at least one example embodiment, at least one of the separate fluid conduit and the corresponding separate fluid conduit is connected to a compressed air device in the form of a compressed air storage tank. Hereby, a portion of compressed air from the compressor(s) can be routed to the air storage tank and stored in the tank for another operating situation requiring more compressed air. The arrangement of the air storage tank downstream the compressors may also contribute to improve the capabilities of the vehicle to absorb and store some amount of energy and power during the braking event. By way of example, the compressed air routed and stored in the air storage tank can be used when operating the fuel cell systems at high altitudes, thereby increasing the likelihood that the fuel cells can provide sufficient power.

The controllable flow control valve and the corresponding controllable flow control valve may be controllable selection valves, respectively, the controllable selection valve being configured to selectively direct compressed air to the at least one fuel cell or the separate fluid conduit, and the corresponding controllable selection valve being configured to selectively direct compressed air to the at least one corresponding fuel cell or the corresponding separate fluid conduit.

Each one of the controllable flow control valve and the corresponding controllable flow control valve may be configured to regulate any one of a flow rate and pressure of the compressed air being supplied from the corresponding compressor.

According to at least one example embodiment, each one of the controllable flow control valve and the corresponding controllable flow control valve is a three-way flow control valve device. A three-way flow control valve device comprises an inlet port fluidly connected to the compressor, a first outlet port fluidly connected to a first conduit and a second outlet port fluidly connected to a second conduit. By way of example, the controllable flow control valve and the corresponding controllable flow control valve may be controllable diverting three-way flow control valves.

The system may comprise a control unit in communication with the fuel cell systems and further configured to control distribution of compressed air to any one of the at least one fuel cells and the compressed air device and exhaust conduit by controlling each one of the valves in response to a control signal further containing data indicative of a fuel cell system load on any one of the fuel cell systems. The data may refer to any one of a current fuel cell system load and a predicted fuel cell system load on any one of the fuel cell systems.

The need for dissipating excessive electrical energy due to the braking demand of the vehicle can be determined or estimated in several different manners. By way of example, the control unit is configured to determine the need for dissipating excessive electrical energy due to the braking demand of the vehicle by determining an amount of possible excessive electrical energy from a regenerative braking event of the vehicle. Typically, although strictly not required, the provision of determining an amount of possible excessive electrical energy from the braking event of the vehicle is determined during a regenerative braking event. However, it may also be possible to predict possible excessive electrical energy from an up-coming braking event of the vehicle in beforehand based on one or more operational parameters, as mentioned herein.

By way of example, the amount of possible excessive electrical energy may further be determined by estimating the total electric energy storage level of the vehicle. The total electrical energy level of the vehicle may comprise different sets of data depending on type of vehicle. By way of example, the total electrical energy level includes data indicating state-of-charge SOC of the energy storage system, including SOC of any battery systems. In addition, or alternatively, the total electrical energy level may include current electrical energy need for powering auxiliaries of the vehicle and predicted future electrical energy need of the vehicle for a given time period. Such data can be gathered by various sensors and the control system, as is commonly known in the art. To this end, the total electrical energy level of the vehicle may correspond to the prevailing SOC of the energy storage system, while including predictive electrical energy demands for the vehicle for a given time period.

According to at least one example embodiment, the amount of possible excessive energy from the braking event of the vehicle is determined based on an operational parameter of the vehicle. By way of example, the operational parameter contains any one of the following data: data relating to an upcoming vehicle path, such as a downhill and uphill path; data relating to a change in vehicle speed, data relating to a change in acceleration, data relating to state-of-charge, SOC, of the ESS, data relating to state of life of the fuel cells, characteristics of the electric machine, data relating to the weight of the vehicle, data indicating type of vehicle.

The control unit may be configured to control each one of the valves to direct compressed air to the fuel cells of the first and second fuel cell systems and the compressed air device / exhaust conduit in response to the need for dissipating excessive electrical energy and further configured to vary the level of the distribution of compressed air to fuel cells in response to a change in a fuel cell system load of any one of the fuel cell systems. In this manner, the control unit provides for controlling the compressed air to the compressed air device / exhaust conduit, while fine adjusting the level of compressed air to the fuel cells of any one of the fuel cell systems when there is a change in the fuel cell load of any one of the fuel cell systems.

The control unit may be configured to deactivate any one of the compressor and the corresponding compressor if the control signal indicates non-braking demand and no fuel cell system load.

The control unit may be configured to be in communication with the compressor and the corresponding compressor and further in communication with the controllable valves. The control unit may comprise a processing circuitry. In addition, the control unit may comprise a memory for receiving and storing data.

In regard to the control of the controllable flow control valve and the corresponding controllable flow control valve, it should be readily appreciated that the actual flow of air between the compressors, the fuel cell(s) and the compressed air device / exhaust conduit may further be controlled in cooperation with other operational data of the vehicle. Such data may generally be stored in the control unit, such as the electronic control unit, ECU. Hence, the control unit may also be configured to be in communication with the controllable flow control valve and the corresponding controllable flow control valve so as to control the valves based on the control signal indicative of the operating condition of the vehicle. The control unit may include the processing circuitry.

The control unit may actuate the controllable flow control valve and the corresponding controllable flow control valve pneumatically or electrically, as is commonly known in the art. Each one of the controllable flow control valve and the corresponding controllable flow control valve may include a switch actuator. By way of example, the switch actuator may have a solenoid actuator operable to move a part of the given controllable flow control valve and the corresponding controllable flow control valve to regulate the opening degree of the inlet port and to open and close the inlet port. Typically, each one of the controllable flow control valve and the corresponding controllable flow control valve comprising associated switch actuator being controllable in response to the input signal from the control unit. Hence, the switch actuator may be configured to operate a controllable flow control valve on the basis of the control instructions from the control unit.

According to a second aspect, there is provided a method for controlling a system of a vehicle. The system comprises at least a first fuel cell system and a second fuel cell system. The first fuel cell system having at least one fuel cell and a compressor disposed in a cathode side of the first fuel cell system and arranged upstream the at least one fuel cell. The first fuel cell system further comprises a controllable flow control valve configured to control supply of compressed air from the compressor to any one of the at least one fuel cell and a separate fluid conduit connectable to any one of a compressed air device and an exhaust outlet. The second fuel cell system comprises at least one corresponding fuel cell and a corresponding compressor disposed in a cathode side of the second fuel cell system and arranged upstream the at least one corresponding fuel cell. The second fuel cell system further comprises a corresponding controllable flow control valve configured to control supply of compressed air from the corresponding compressor to any one of the at least one corresponding fuel cell and a corresponding separate fluid conduit connectable to any one of the compressed air device and the exhaust outlet. The method comprises receiving a control signal indicative of an operational state of any one of the first and second fuel cell systems; and operating the controllable flow control valve and the corresponding controllable flow control valve in response to received control signal indicative of the operational state of any one of the first and second fuel cell systems.

Effects and features of the second aspect are largely analogous to those described above in relation to the first aspect.

The method may typically be implemented by control unit comprising a processing circuitry configured to perform the steps of the method.

According to a third aspect, there is provided a computer program comprising program code means for performing the steps of any one of the embodiments described above in relation to the first aspect when the program is run on a computer. According to a fourth aspect, there is provided a computer readable medium carrying a computer program comprising program means for performing the steps of any one of the embodiments described above in relation to the first aspect when the program means is run on a computer. According to a fifth aspect, there is provided a vehicle comprising a system according to any one of the embodiments described above in relation to the first aspect.

Effects and features of the third, fourth and fifth aspects are largely analogous to those described above in relation to the first and second aspects.

The vehicle may at least partly be propelled by an electric machine, the electric machine being electrically connected to a fuel cell system. According to at least one example embodiment, the vehicle thus comprises the electric traction machine configured to propel the vehicle and to controllably regenerate electric power during regenerative braking of the vehicle. The electric machine may be connected to the compressors for powering the compressors by electric energy. The vehicle may generally comprise an electric energy storage system in electric connection with the electric machine. The electric energy storage system may be a battery system configured to receive and supply electric power, wherein the electric machine is operated by electric power received from the battery system.

The battery system may further be electrically connected to the electric traction machine and configured to receive electric power during regenerative braking.

According to an embodiment, the electric energy storage system is a battery system which can be charged by electric power during regenerative braking, or to supply electric power to e.g. the electric machine for operation of the compressors, i.e. the compressor and the corresponding compressor. The electric energy storage system thus has a charging capacity, which corresponds to the available electric power that the electric energy storage system can receive before being filled. The charging capacity may also be based on e.g. the temperature of the electric energy storage system, state of charge (SOC), etc. Accordingly, when the electric energy storage system has reached its maximum allowed state of charge level it may generally not receive any further electric power. Typically, the control unit may also be connected to the electric energy storage system.

The control unit may comprise a processing circuitry configured to receive a signal indicative of a regenerative braking request for the vehicle, determine a level of electric power generated by the electric traction machine during the regenerative braking of the vehicle, receive a signal indicative of a current electric charging capacity of the electric energy storage system, compare the level of electric power generated during the regenerative braking with the current electric charging capacity of the electric energy storage system, and control the electric energy storage system to supply electric power to the electric machine during the regenerative braking when the level of electric power generated during the regenerative braking is higher than the current charging capacity of the electric storage system. The electric machine may then be configured and connected to the compressor and the corresponding compressor so as to power the compressors from electric power. The electric machine may also power the compressors from electrical energy generated due to the braking event, whereby the electric machine is controlled to be operated as a generator and provide power to the compressors.

Further features of, and advantages will become apparent when studying the appended claims and the following description. The skilled person will realize that different features may be combined to create embodiments other than those described in the following, without departing from the scope of the present disclosure.

The terminology used herein is for the purpose of describing particular examples only and is not intended to be limiting of the disclosure. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

### BRIEF DESCRIPTION OF THE DRAWINGS

The above, as well as additional objects, features, and advantages, will be better understood through the following illustrative and non-limiting detailed description of exemplary embodiments, wherein:
Fig. 1 is a lateral side view illustrating an example embodiment of a vehicle in the form of a truck;
Fig. 2 is a schematic illustration of an example embodiment of a system comprising a system with a dual fuel cell system in fluid communication with an exhaust outlet;
Fig. 3 is a schematic illustration of another example embodiment of a system comprising a system with a dual fuel cell system in fluid communication with a brake resistor;
Fig. 4 is a schematic illustration of another example embodiment of a system comprising a system with a dual fuel cell system in fluid communication with an air storage tank; and
Fig. 5 is a flow chart of a method of controlling the system according to an example embodiment.

### DETAILED DESCRIPTION

The present disclosure will now be described more fully hereinafter with reference to the accompanying drawings, in which exemplary embodiments are shown. The disclosure may, however, be embodied in many different forms and should not be construed as limited to the embodiments set forth herein; rather, these embodiments are provided for thoroughness and completeness. Like reference character refer to like elements throughout the description.

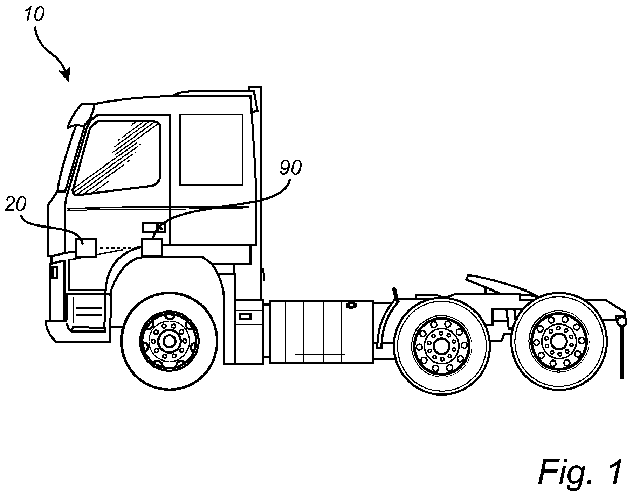

With particular reference to Fig. 1, there is depicted a vehicle 10 in the form of a truck. The vehicle 10 comprises a system 20, as further described herein, and favourably a control unit 90 for controlling the system 20 according to the following examples. The system 20 can be incorporated in a vehicle 10, such as an electric vehicle. In this type of application, the system 20 generally corresponds to parts of an electric powertrain system (not illustrated) for the vehicle 10.

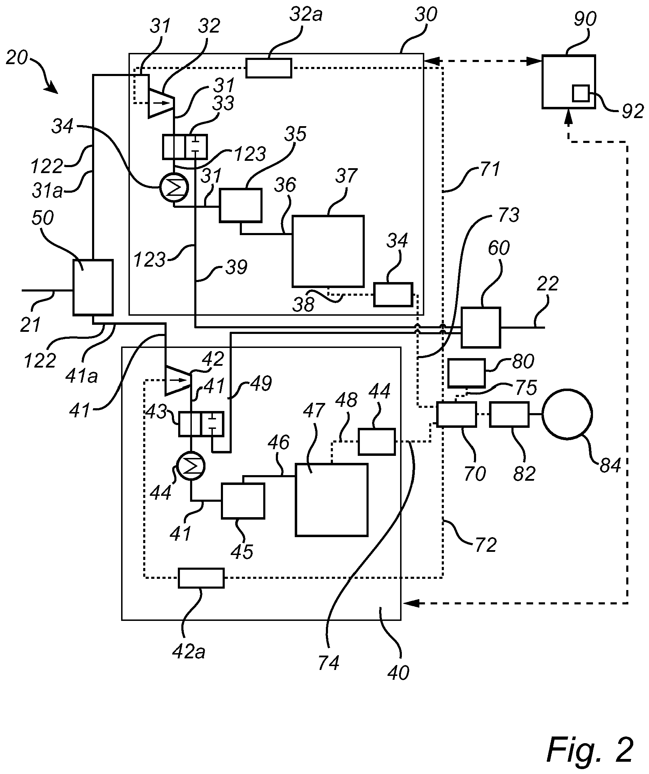

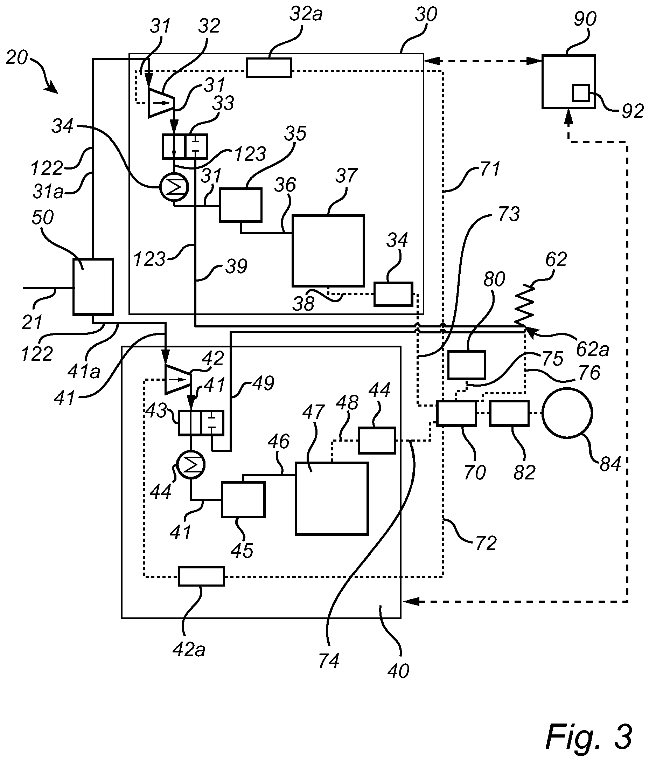

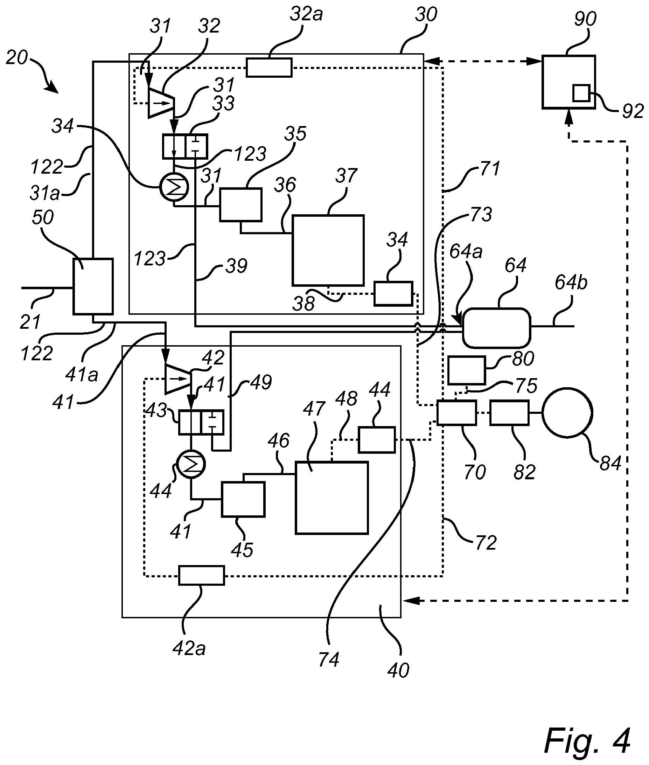

In order to describe the system 20 in more detail, reference is made to Fig. 2 which is a schematic illustration of the system according to an example embodiment. The system 20 comprises a first fuel cell system 30 and a second fuel cell system 40. In Fig. 2, and in the other Figs. 3 and 4, a dotted line generally denotes an electrical connection while a solid line denotes a fluid medium connection. The dashed line between the control unit 90 and the system 20 denotes a communication connection.

As illustrated in Fig. 2, the system 20 comprises the control unit 90 in communication with the first fuel cell system 30 and the second fuel cell system 40. The control unit 90 favourably comprises a processing circuitry 92 configured to control the system 20 and the first and second fuel cell systems 30, 40.

In Fig. 2, the system 20 here also comprises a traction machine 82 for propelling one or more set of wheels 84 of the vehicle 10. The traction machine 82 is here provided in the form of an electric machine arranged to receive electric power from a battery system 80 or directly from one or more fuel cell systems 30, 40 which are described in further detail below. Thus, the system 20 comprises the first fuel cell system 30, the second fuel cell system 40, the battery system 80 and the electric traction machine 82, wherein the fuel cell systems 30, 40 and the battery system 80 are selectively connectable to the electric traction machine 82, e.g. by a junction unit 70. As such, the vehicle 10 comprises the system 20 which favourably forms integral parts of an electrical powertrain system for providing propulsion to the vehicle 10.

As illustrated in Fig. 2, the first fuel cell system 30 comprises at least one fuel cell 37. The at least one fuel cell 37 may generally be composed of more than one fuel cell, such as two fuel cells or a plurality of fuel cells. Thus, the at least one fuel cell 37 here forms a so-called fuel cell stack. The at least one fuel cell 37 may thus be referred to as the first fuel cell stack. The fuel cells may likewise be arranged in multiple fuel cell stacks, each fuel cell stack comprising multiple fuel cells arranged in a stack configuration. In regard to the first fuel cell stack 37 of the first fuel cell system 30, each one of the fuel cells making up the first fuel cell stack 30 generally comprises an anode side receiving hydrogen as a fuel component and a cathode side receiving compressed air as the oxidizing component. While there are several different types of fuel cells, distinguished mainly by the type of electrolyte used, a so-called Proton Exchange Membrane (PEM) fuel cell is particularly suitable for use in heavy-duty vehicles, such as the vehicle 10 in Fig. 1. Hence, the fuel cell 37 is here a PEM fuel cell stack.

Turning to Fig. 2, the first fuel cell 37 is schematically illustrated and only depicts the cathode side, i.e. the anode side is omitted for simplifying the illustration. Other components such as balance of plant components could also be included in the first fuel cell system as are commonly used in the field of fuel cell system.

The first fuel cell system 30 further comprises an air inlet conduit 31 connected to an inlet end 36 of the cathode side of the fuel cell 37. The inlet conduit 31 is arranged to supply air to the cathode side. The inlet conduit 31 has an inlet 31a in fluid communication with ambient environment 21, as illustrated in Fig. 2. The first fuel cell system 30 also comprises an outlet conduit (not illustrated) connected to an outlet end (not illustrated) of the fuel cell 37 cathode side. Hereby, exhaust flow is supplied from the outlet end of the fuel cell 37 and into the outlet conduit.

The first fuel cell system 30 also comprises an air compressor 32, sometimes also denoted as the compressor. The air compressor 32 is disposed in the inlet conduit 31, as depicted in Fig. 2. In particular, the air compressor 32 is arranged upstream the fuel cell 37 in the inlet conduit 31. The air compressor 32 is arranged in fluid communication with the cathode side, as illustrated in Fig. 2.

Moreover, the air compressor 32 is generally arranged downstream the inlet 31a of the inlet conduit 31.

The air compressor 32 is an electrical compressor. In other words, the air compressor is an electrically-driven compressor. Thus, the first fuel cell system 30 comprises a first electric motor 32a. The first electric motor 32a is arranged to operate the air compressor 32. The first electric motor 32a can be an integral part of the electrical compressor 32 or a separate component in electrical connection with the compressor 32. As further described herein, the compressor 32 is drivingly connected to the electric motor 32a, and further operable from any source of electrical energy, including recuperated energy from braking.

The compressor 32 is configured to operate in any type of driving situation, even when the vehicle is not braking. The compressor 32 is generally at least operating when the vehicle is not braking so as to provide air to the fuel cell system 30. The compressor 32 is operated to increase the pressure level of the intake air to levels suitable for the fuel cells. Suitable levels of the air are generally predetermined and stored in the control unit 90. Such levels can be derived from look-up tables and the like. By increasing the pressure level of the intake air, also the temperature level of the intake air is increased.

Although not explicitly illustrated, the first fuel cell system 30 may also comprise an expander. The expander may be a turbine. By way of example, the air compressor 32, the expander and the first electric motor 32a are coupled to each other by means of a compressor shaft. The purpose of the expander is to support the electric motor 32a, such that part of the electrical energy/power required by the compressor 32 is provided by the expander and rest is delivered from the electric motor 32a.

In Fig. 2, the air compressor 32 is an electrical compressor powered by the electric motor 32a which receives electric power from one or more electrical energy sources, such as the battery system 80 and the electric traction machine 82, but also the fuel cells. As such, the air compressor 32 is in electrical connection with the battery system 80, the electric traction machine 82 and the fuel cells via the junction unit 70, as depicted in Fig. 2. In particular, the air compressor 32 is in electrical connection with the junction unit 70 via an electrical connection 71, as depicted in Fig. 2. Thus, the electric motor 32a for the compressor 32 is in electrical connection with the junction unit 70 via the electrical connection 71, as depicted in Fig. 2. The electric motor 32a is arranged in between the air compressor 32 and the junction unit 70. The electric motor 32a is thus in electrical connection with the air compressor 32 and the junction unit 70.

The air compressor 32 is arranged to receive ambient air 122, and pressurize ambient air to compressed air 123. The ambient air is supplied to the air compressor 32 via an air filter 50, as illustrated in Fig. 2. The pressurized ambient air (compressed air 123) is subsequently supplied through the inlet conduit 31 and provided to the inlet end 36 of the fuel cell 37. As illustrated in Fig. 2, the air filter 50 is arranged upstream the air compressor 32. In addition, the air filter 50 is arranged at the inlet 31a of the air inlet conduit 31. The first fuel cell system 30 thus comprises the air filter 50 arranged to receive air from the ambient environment 21. The air compressor, air filter and expander are commonly known components in the fuel cell system and thus not further described herein.

By means of the example embodiment depicted in Fig. 2, ambient air 122 is received by the air compressor 32, via the filter 50. The air compressor 32 pressurizes the air and supplies the pressurized air towards the inlet end 36 of the fuel cell 37, where electric power is generated. The fuel cell 37 exhausts cathode exhaust through the outlet end and into the outlet conduit. The exhaust flow may optionally be further directed into the expander, which expands the air and supplies the expanded air to an exhaust conduit.

Turning again to Fig. 2, the first fuel cell system 30 further comprises a controllable flow control valve 33 configured to control and direct compressed air 123 to the fuel cell 37. The controllable flow control valve 33 is disposed in the inlet conduit 31 of the cathode side.

As illustrated in Fig. 2, the controllable flow control valve 33 is also configured to direct compressed air 123 to a separate fluid conduit 39. The separate fluid conduit 39 is connected to an exhaust outlet 60. The exhaust outlet 60 here comprises a muffler. The exhaust outlet 60 is configured to route compressed air 123 to the ambient atmosphere 22, as illustrated in Fig. 2. Generally, the first fuel cell system 30 thus comprises the separate fluid conduit 39. By the controllable flow control valve 33, the compressor 32 is in fluid communication with the at least one fuel cell and the separate fluid conduit 39. Each one of the fluid conduit 31 and the separate fluid conduit 39 is configured to transfer compressed air 123. In particular, the air inlet conduit 31 is configured to transfer compressed air to the fuel cell 37, whilst the separate fluid conduit 39 is configured to transfer compressed air to the exhaust outlet 60 to ambient atmosphere 22.

Thus, the air compressor 32 is disposed in the air inlet conduit 31 and in fluid communication with the cathode side of the fuel cell via the air inlet conduit 31. Analogously, the exhaust outlet 60 is disposed at an end part of the separate fluid conduit 39. The exhaust outlet 60 is thus arranged in fluid communication with the air compressor 32 via the separate fluid conduit 39. The separate fluid conduit 39 is here an integral part of the fuel cell system 30. However, the separate fluid conduit 39 may likewise be a separate conduit connected to the air inlet conduit 31 via the valve 33.

In Fig. 2, the controllable flow control valve 33 is a three-way flow control valve device. By way of example, the controllable flow control valve 33 is a co called diverting three-way valve. Such diverting three-way valve 33 comprises one inlet port and two individual outlet ports. The diverting three-way valve is configured to receive a fluid medium to the inlet port and distribute the received fluid medium to any one of the outlet ports. In the controllable flow control valve 33 in Fig. 2, one inlet port is fluidly connected to the air compressor 32, one outlet port is fluidly connected to the fuel cell(s) 37 via the first conduit 31, and another outlet port is fluidly connected to the exhaust outlet 60 via the separate fluid conduit 39.

The controllable flow control valve 33 is configured to vary its valve position such that a varying flow rate of compressed air can be achieved to the first conduit 31 and the conduit 39.

The first fuel cell system 30 may also comprise additional conventional system components, such as a humidifier 35 configured to manage and transfer humidity in the cathode side, a charge air cooler 34, such as a charge air intercooler, arranged in the inlet conduit 31 etc. While these types of components may be provided in several different ways, such components are not considered relevant for the functions described herein, and thus not further described.

Turning now again to Fig. 2 and the second fuel cell system 40. The second fuel cell system 40 is favourably provided in a similar vein as the first fuel cell system 30. The second fuel cell system 40 comprises at least one corresponding fuel cell 47. The at least one corresponding fuel cell 47 may generally be composed of more than one fuel cell, such as two fuel cells or a plurality of fuel cells. Thus, the at least one corresponding fuel cell 47 here forms a so-called fuel cell stack. The at least one corresponding fuel cell 47 may thus be referred to as the second fuel cell stack. The fuel cells may likewise be arranged in multiple fuel cell stacks, each fuel cell stack comprising multiple fuel cells arranged in a stack configuration. In regard to the second fuel cell stack 47 of the second fuel cell system 40, each one of the fuel cells making up the second fuel cell stack 40 generally comprises an anode side receiving hydrogen as a fuel component and a cathode side receiving compressed air as the oxidizing component. While there are several different types of fuel cells, distinguished mainly by the type of electrolyte used, a so-called Proton Exchange Membrane (PEM) fuel cell is particularly suitable for use in heavy-duty vehicles, such as the vehicle 10 in Fig. 1. Hence, the fuel cell 47 is here a PEM fuel cell stack.

In Fig. 2, the second fuel cell 47 is schematically illustrated and only depicts the cathode side, i.e. the anode side is omitted for simplifying the illustration. Other components such as balance of plant components could also be included in the second fuel cell system as are commonly used in the field of fuel cell system.

The second fuel cell system 40 further comprises an air inlet conduit 41 connected to an inlet end 46 of the cathode side of the fuel cell 47. The inlet conduit 41 is arranged to supply air to the cathode side. The inlet conduit 41 has an inlet 41a in fluid communication with ambient environment 21, as illustrated in Fig. 2. The second fuel cell system 40 also comprises an outlet conduit (not illustrated) connected to an outlet end (not illustrated) of the fuel cell 47 cathode side. Hereby, exhaust flow is supplied from the outlet end of the fuel cell 47 and into the outlet conduit.

The second fuel cell system 40 also comprises an air compressor 42, sometimes also denoted as the compressor. The air compressor 42 is disposed in the inlet conduit 41, as depicted in Fig. 2. In particular, the air compressor 42 is arranged upstream the fuel cell 47 in the inlet conduit 41. The air compressor 42 is arranged in fluid communication with the cathode side, as illustrated in Fig. 2.

Moreover, the air compressor 42 is generally arranged downstream the inlet 41a of the inlet conduit 41.

The air compressor 42 is an electrical compressor. In other words, the air compressor is an electrically-driven compressor. Thus, the second fuel cell system 40 comprises a corresponding second electric motor 42a. The corresponding second electric motor 42a is arranged to operate the air compressor 42. The corresponding second electric motor 42a can be an integral part of the electrical compressor 42 or a separate component in electrical connection with the compressor 42. As further described herein, the compressor 42 is drivingly connected to the electric motor 42a, and further operable from any source of electrical energy, including recuperated energy from braking.

The compressor 42 is configured to operate in any type of driving situation, even when the vehicle is not braking. The compressor 42 is generally at least operating when the vehicle is not braking so as to provide air to the fuel cell system 40. The compressor 42 is operated to increase the pressure level of the intake air to levels suitable for the fuel cells. Suitable levels of the air are generally predetermined and stored in the control unit 90. Such levels can be derived from look-up tables and the like. By increasing the pressure level of the intake air, also the temperature level of the intake air is increased.

Although not explicitly illustrated, the second fuel cell system 40 may also comprise an expander. The expander may be a turbine. By way of example, the air compressor 42, the expander and the corresponding second electric motor 42a are coupled to each other by means of a compressor shaft. The purpose of the expander is to support the corresponding second electric motor 42a, such that part of the electrical energy/power required by the compressor 42 is provided by the expander and rest is delivered from the corresponding second electric motor 42a.

In Fig. 2, the air compressor 42 is an electrical compressor powered by the corresponding second electric motor 42a which receives electric power from one or more electrical energy sources, such as the battery system 80 and the electric traction machine 82, but also the fuel cells. As such, the air compressor 42 is in electrical connection with the battery system 80, the electric traction machine 82 and the fuel cells via the junction unit 70, as depicted in Fig. 2. In particular, the air compressor 42 is in electrical connection with the junction unit 70 via an electrical connection 72, as depicted in Fig. 2. Thus, the corresponding second electric motor 42a for the compressor 42 is in electrical connection with the junction unit 70 via the electrical connection 72, as depicted in Fig. 2. The corresponding second electric motor 42a is arranged in between the air compressor 42 and the junction unit 70. The electric motor 42a is thus in electrical connection with the air compressor 42 and the junction unit 70.

The air compressor 42 is arranged to receive ambient air 122, and pressurize ambient air to compressed air 123. The ambient air is supplied to the air compressor 42 via an air filter 50, as illustrated in Fig. 2. The pressurized ambient air (compressed air 123) is subsequently supplied through the inlet conduit 41 and provided to the inlet end 46 of the fuel cell 47. As illustrated in Fig. 2, the air filter 50 is arranged upstream the air compressor 42. In addition, the air filter 50 is arranged at the inlet 41a of the air inlet conduit 41. The second fuel cell system 40 thus comprises the air filter 50 arranged to receive air from the ambient environment 21. The air compressor, air filter and expander are commonly known components in the fuel cell system and thus not further described herein.

It should be noted that ambient air supplied to the compressors 32, 42 can also be performed by having two separate air filters with separate connections to the ambient for the two systems 30, 40. One filter is connected to conduit 31 and one filter is connected to conduit 41. Each air filter will thus have its own connection with the ambient air.

By means of the example embodiment depicted in Fig. 2, ambient air 122 is received by the air compressor 42, via the filter 50. The air compressor 42 pressurizes the air and supplies the pressurized air towards the inlet end 46 of the fuel cell 47, where electric power is generated. The fuel cell 47 exhausts cathode exhaust through the outlet end and into the outlet conduit. The exhaust flow may optionally be further directed into the expander, which expands the air and supplies the expanded air to an exhaust conduit.

Turning again to Fig. 2, the second fuel cell system 40 further comprises a corresponding controllable flow control valve 43 configured to control and direct compressed air 123 to the fuel cell 47. The corresponding controllable flow control valve 43 is disposed in the inlet conduit 41 of the cathode side. The corresponding controllable flow control valve 43 is generally of the same type as the controllable flow control valve 33.

As illustrated in Fig. 2, the corresponding controllable flow control valve 43 is also configured to direct compressed air 123 to a separate fluid conduit 49. The separate fluid conduit 49 is connected to an exhaust outlet 60. The exhaust outlet 60 here comprises a muffler. The exhaust outlet 60 is configured to route compressed air 123 to the ambient atmosphere 22, as illustrated in Fig. 2. Generally, the second fuel cell system 40 thus comprises the separate fluid conduit 49. By the controllable flow control valve 43, the compressor 42 is in fluid communication with the at least one fuel cell and the separate fluid conduit 49. Each one of the fluid conduit 41 and the separate fluid conduit 49 is configured to transfer compressed air 123. In particular, the air inlet conduit 41 is configured to transfer compressed air to the fuel cell 47, whilst the separate fluid conduit 49 is configured to transfer compressed air to the exhaust outlet 60 to ambient atmosphere 22.

Thus, the air compressor 42 is disposed in the air inlet conduit 41 and in fluid communication with the cathode side of the fuel cell via the air inlet conduit 41. Analogously, the exhaust outlet 60 is disposed at an end part of the separate fluid conduit 49. The exhaust outlet 60 is thus arranged in fluid communication with the air compressor 42 via the separate fluid conduit 49. The separate fluid conduit 49 is here an integral part of the fuel cell system 40. However, the separate fluid conduit 49 may likewise be a separate conduit connected to the air inlet conduit 41 via the valve 43.

In Fig. 2, the controllable flow control valve 43 is a three-way flow control valve device. By way of example, the controllable flow control valve 43 is a co called diverting three-way valve. Such diverting three-way valve 43 comprises one inlet port and two individual outlet ports. The diverting three-way valve is configured to receive a fluid medium to the inlet port and distribute the received fluid medium to any one of the outlet ports. In the controllable flow control valve 43 in Fig. 2, one inlet port is fluidly connected to the air compressor 42, one outlet port is fluidly connected to the fuel cell(s) 47 via the air inlet conduit 41, and another outlet port is fluidly connected to the exhaust outlet 60 via the separate fluid conduit 49. In general, a diverting three-way flow control valve device is configured to provide for a variable control of supplying compressed air to the outlet ports. Thus, the controllable flow control valve 43 is configured to vary its valve position such that a varying flow rate of compressed air can be achieved to the conduit 41 and the conduit 49.

The second fuel cell system 40 may also comprise additional conventional system components, such as a humidifier 45 configured to manage and transfer humidity in the cathode side, a charge air cooler 44, such as a charge air intercooler, arranged in the inlet conduit 41 etc. While these types of components may be provided in several different ways, such components are not considered relevant for the functions described herein, and thus not further described.

In the following, there is described one or more examples of controlling the above-mentioned valves 33 and 43 of the first and second fuel cell systems 30, 40, respectively.

In the example embodiment illustrated in Fig. 2, the controllable flow control valve 33 and the corresponding controllable flow control valve 43 are collectively operable on the basis of an operational state of any one of the first and second fuel cell systems 30, 40. In this example, the operational state is a power level of the given fuel cell system.

By way of example, the controllable flow control valve 33 and the corresponding controllable flow control valve 43 are controlled to supply compressed air 123 to the at least one fuel cell 37 and the at least one corresponding fuel cell 47, respectively, when the at least one fuel cells 37 of the first cell system 30 and the at least one corresponding fuel cells 47 of the second fuel cell system 40 are operated to deliver power to the vehicle 10.

In addition, or alternatively, the controllable flow control valve 33 and the corresponding controllable flow control valve 43 are collectively operable in response to a change in any one of an operational state of the at least one fuel cell 37 of the first fuel cell system 30 and an operational state of the at least one corresponding fuel cell 47 of the second fuel cell system 40. In this example, the change in the operational state corresponds to a change in the power level of the fuel cells 37 and/or a change in the power level of the fuel cells 47.

Favourably, when the at least one fuel cell 37 of the first cell system 30 and the at least one corresponding fuel cell 47 of the second fuel cell system 40 are both operated to deliver power to the vehicle 10, the controllable flow control valve 33 and the corresponding controllable flow control valve 43 are further controlled to supply compressed air 123 to the separate fluid conduit 39 and the corresponding separate fluid conduit 49 if the first and second fuel cell systems 30, 40 are operated at low power levels defined by a suitable threshold level. Such threshold level can be a predetermined level or a dynamic threshold level. One example of a threshold level may be a minimum power level. Suitable threshold levels are generally predetermined and stored in the control unit. Such levels can be derived from look-up tables and the like. However, the threshold levels may also be set in a dynamic manner by updating the levels based on operational data from the fuel cell systems.

In addition, or alternatively, when the at least one fuel cell 37 of the first cell system 10 is operated in a non-operational state and the at least one corresponding fuel cell 47 of the second fuel cell system 40 is operated to deliver power to the vehicle 10, the controllable flow control valve 33 of the non-operational fuel cell system is controlled to supply compressed air 123 to the separate fluid conduit 39, while the corresponding controllable flow control valve 43 of the operational fuel cell system is controlled to supply compressed air 123 to the at least one corresponding fuel cell 47 of the second fuel cell system 40. The control of the system according to the above can also be performed for an opposite operational situation, i.e. when the system 40 is not operational and the system 30 is operational.

Optionally, the controllable flow control valve 33 and the corresponding controllable flow control valve 43 are controlled to supply compressed air 123 to the separate fluid conduit 39 and the corresponding separate fluid conduit 49, respectively, when the at least one fuel cell 37 of the first cell system 30 and the at least one corresponding fuel cell 47 of the second fuel cell system 40 are operated in corresponding non-operational states. In other words, the controllable flow control valve 33 and the corresponding controllable flow control valve 43 are controlled so that no compressed air 123 being supplied to the fuel cells 37, 47 when first and second fuel cell systems 30, 40 are in their non-operational states, e.g. when the first and second fuel cell systems 30, 40 are shut-down.

It should be noted that the controllable flow control valve 33 and the corresponding controllable flow control valve 43 may necessarily not be provided as fully variable flow control valves, but can also be provided as conventional selection valves (so called selective valves). Hence, in another design of the valves, the controllable flow control valve 33 and the corresponding controllable flow control valve 43 are controllable selection valves, respectively. As such, the controllable selection valve 33 is configured to selectively direct compressed air 123 to the at least one fuel cell 37 or the separate fluid conduit 39 being connected to the exhaust outlet 60, whilst the corresponding controllable selection valve 43 is configured to selectively direct compressed air 123 to the at least one corresponding fuel cell 47 or the corresponding separate fluid conduit 49 connected to the exhaust outlet 60.

In Fig. 2 there is also illustrated how the fuel cells 37 and the corresponding fuel cells 47 of the first and second fuel cell systems, receptively, are electrically connected to the other parts of the FCEV for providing traction power via one or more wheels 84 of the vehicle 10. The FCEV 10 illustrated in Figs. 1 and 2 is configured in a series hybrid design where the fuel cells 37 (forming the first fuel cell stack) and the corresponding fuel cells 47 (forming the second fuel cell stack) are paired with the battery system 80. In addition, the first fuel cell system 30 here comprises a DC/DC converter 34 arranged in electric connection with a common power outlet 38 of the fuel cells 37. Analogously, the second fuel cell system 40 here comprises a corresponding DC/DC converter 44 arranged in electric connection with a common power outlet 48 of the corresponding fuel cells 47.

The function of the DC/DC converters 34, 44 are to provide (supply) power from the fuel cells 37, 47 of the first and second fuel cell systems 30, 40, respectively, at the right voltage as of the traction/battery system. The system 20 also includes the junction unit 70. The junction unit 70 is a housing that serves as the communal meeting spot for the electrical wires and will redirect the current/power to the different components. In other words, the junction unit 70 is here configured to connect the fuel cells 37, 47 of the first and second fuel cell systems 30, 40, respectively, to the battery system 80 and the electric traction machine 82. Traction power to the wheels 80 is delivered by any one of the battery system 80, electric traction machine and the fuel cells 37, 47 of the first and second fuel cell systems 30, 40, respectively.

The fuel cells 37, 47 of the first and second fuel cell systems 30, 40 are electrical connected to the junction unit 70 via first and second electrical output connections 73, 74, respectively, as illustrated in e.g. Fig. 2.

In addition, the junction unit 70 is here configured to connect the fuel cells 37, 47 of the first and second fuel cell systems 30, 40, respectively, to the first and second compressors 32, 42. The electrical connections are provided by the electrical connections 73, 74 and the electrical connections 71, 72, as illustrated in Fig. 2.

The battery system 80 is connected to the junction unit 70 by an electrical connection 75. By way of example, the battery system 80 is connected via the junction unit 70 to the electric traction machine 82 that provides traction power to the vehicle, while the fuel cells 37, 47 of the first and second fuel cell systems 30, 40 supply electrical energy to the electric traction machine 82 and/or delivers power to the battery system 80 via the DC/DC converter 34, 44 and the junction unit 70, as is commonly known in the field of FCEVs. In other words, a typical FCEV may also use traction batteries or capacitors, inverters, and electric motors for providing traction power to the vehicle.

In a regenerative mode of the system during the braking event, where the electric traction machine 82 is operated as a generator, power from the electric traction machine 82 will be transferred to the each one of the electric motors 32a, 42a for powering the respective first and second compressors 32, 42. As such, the junction unit 70 is here configured to electrical connect the battery system 80 and the electric traction machine 82 to the first and second compressors 32, 42. In this manner, generated excessive electrical energy and/or recuperation energy from the electric traction machine 82 can be directed to power the first and second compressors 32, 42, respectively.

As an example, if 100kW is transferred from the electric traction machine 82, the junction unit 70 might split the amount of power so that 50kW is transferred to the first and second compressors 32, 42, respectively, and 50kW to the battery system 80. The control of such power transfer from the junction unit 70 may be determined by the control unit, such as the ECU, while the actual routing of power will be handled by the junction unit.

It should be noted that the configuration of the FCEV 10 and the system 20 illustrated in Figs. 1 and 2 is only one of many suitable configurations for a FCEV to be used with the system 20. By way of example, the system may include a plurality of fuel cell systems arranged in a parallel configuration with the battery system. In addition, the battery system may include a plurality of battery packs. In addition, or alternatively, the battery system may be an integral part of the fuel cell system. Moreover, the system 20 may include or be connected to a bi-directional charging port capable of both receiving electrical energy from and providing electrical energy to an external power supply. Such an external power supply may for example be a charging station connected to the power grid, a battery or another vehicle. The system 20 can be considered to comprise one or more electric traction motors connected to one or more wheels 84 of the vehicle, either directly or via a transmission arrangement (not shown). The vehicle may further comprise a combustion engine (not shown) for vehicle propulsion, and the combustion engine, battery, and fuel cell systems can together be controlled to provide power to the vehicle in an efficient manner.

Fig. 3 schematically illustrates another example embodiment of the system 20. The system 20 generally comprises the components and features as described in relation to Fig. 2. One difference between the system in Fig. 3 and the system in Fig. 2 is that the separate fluid conduit 39 and the corresponding separate fluid conduit 49 are connected to a brake resistor 62. The brake resistor is here a component arranged to be cooled by the compressed air 123. Hence, the brake resistor 62 may generally also be denoted as an air-cooled brake resistor.

Thus, the air-cooled brake resistor 62 is arranged downstream the separate fluid conduit 39 and the corresponding separate fluid conduit 49. The air-cooled brake resistor 62 may be fluidly connected to the separate fluid conduit 39 and the corresponding separate fluid conduit 49 via a common inlet 62a of the air-cooled brake resistor 62. In this design alternative, the separate fluid conduit 39 and the corresponding separate fluid conduit 49 intersect into a common conduit connecting the conduits 39, 49 to the inlet 62a of the air-cooled brake resistor 62. In another arrangement of the system 20, the air-cooled brake resistor 62 has two inlets 62a for connecting the separate fluid conduit 39 and the corresponding separate fluid conduit 49 to the air-cooled brake resistor 62 (although not shown).

The air-cooled brake resistor 62 is thus arranged in fluid communication with the air compressor 32 via the separate fluid conduit 39 and the controllable flow control valve 33. Analogously, the air-cooled brake resistor 62 is arranged in fluid communication with the corresponding air compressor 42 via the corresponding separate fluid conduit 49 and the corresponding controllable flow control valve 43.

In Fig. 3, the air-cooled brake resistor 62 is arranged to be cooled by the supplied compressed air 123 from any one of the air compressors 32, 42. In other words, the air-cooled brake resistor 62 is an air-cooled brake resistor in downstream fluid communication with the air compressors 32, 42. Favourably, there may also be a corresponding charge-air-cooler (not illustrated) disposed in the respective conduits 39, 49 to regulate the temperature of the air downstream the corresponding compressors.

In addition, the air-cooled brake resistor is generally an electric powered brake resistor. This means that the air-cooled electric brake resistor 62 is arranged in electric connection with, and operable by, an electric energy source, such as the electric traction machine 82. In Fig. 3, the brake resistor 62 is connected to the junction unit 70 by an electrical connection 76. Hence, the brake resistor 62 is connected to the electric traction machine 82 via the junction unit 70.

Thus, the air-cooled electric brake resistor 62 is arranged as an electric power consumer. When the air-cooled electric brake resistor 62 receives electric power from the electric traction machine 82, the pressurized air 123 from the air compressors 32, 42 is heated by the brake resistor. The pressurized and heated air is thereafter directed towards the ambient environment. The air from the air-cooled electric brake resistor 62 is preferably directed into a muffler (not shown) of a braking device. The muffler is configured to reduce noise and can also provide a pressure drop of the air.

The air-cooled electric brake resistor 62 is configured to be cooled by the compressed air 123 from the air compressors 32, 42 in order to avoid excess heating. Hence, the air-cooled electric brake resistor 62 is connected to an air-cooling system, allowing the air-cooled electric brake resistor 62 to be cooled by the compressed air 123 from the compressors 32, 42.

During operation of the vehicle 10, i.e. when the electric traction machine 82 operates as a generator to control the vehicle speed, i.e. the vehicle 10 operates in the regenerative braking mode, electric power is transmitted from the electric traction machine 82 to the battery system 80. If the battery system 80 is not able to receive all, or parts of the electric power generated by the electric traction machine 82, for example because of a current electric charging capacity, i.e. the level of electric power of the battery system 80 is able to receive until being fully charged or has reached its maximum allowed state of charge level, the excess electric power should preferably be dissipated. In the present case, the battery system 80 is controlled by the control unit 90 to supply electric power to the electric motors 32a, 42a of the first and second fuel cell systems 30, 40. In addition, or alternatively, the electric traction machine 82 operating in its generator mode to generate electrical energy may directly supply electrical energy to the electric motors 32a, 42a that are operating to power, and thus move, the compressors 32 and 42, respectively, so as to compress air. In other words, the compressors 32 and 42 are provided with corresponding electric motors 32a, 42a (that may also be integral parts of compressors) which are connected to the junction unit 70 to receive power from the battery system 80, the electric traction machine 82, and/or the fuel cells 37, 47.

The electric motors 32a, 42a are hereby, by the received electric power from the battery system 80, fuel cells 37, 47, and/or electric traction machine 82, powering the air compressors 32, 42. Each one of the air compressors 32, 42 in turn pressurizes air 122 and supplies the pressurized air 123 further through the air conduit 31, 41, respectively, to the fuel cells 37, 47 via the respective conduits 31, 41, and also to the air-cooled electric brake resistor 62 via the respective conduits 39, 49. As such, the air compressors 32, 42 are generally configured to pressurize ambient air to a certain level to generate a steady stream of airflow, which may be used for the proper function of the fuel cell(s) 37, 47 and for supplying compressed air 123 cooling the air-cooled electric brake resistor 62.

To sum up, the air compressors 32, 42 are operable by the corresponding electric motors 32a, 42a. The electric motors 32a, 42a are powered by the electric traction machine 82 configured to operate in a generator mode. In addition, or alternatively, the electric motors 32, 42a are operated / powered by power from any one of the fuel cells and/or by the battery system. Other options may also be contemplated depending on type of vehicle.

In Fig. 3, the controllable flow control valve 33 and the corresponding controllable flow control valve 43 are generally controlled in a similar vein as the described in relation to the example embodiment in Fig. 2. As such, the controllable flow control valve 33 and the corresponding controllable flow control valve 43 are collectively operable on the basis of the operational state of any one of the first and second fuel cell systems 30, 40. The system 20 in Fig. 3 is also controlled by the control unit 90. Hence, as mentioned in relation to Fig. 2, the control unit 90 is configured to control the valves 33, 43.

The following will describe additional examples of how to control the flow of compressed air 123 from the respective air compressors 32, 42 to the respective fuel cells 37, 47 and the air-cooled electric brake resistor 62 of the above-described system 20 via the controllable flow control valve 33 and the corresponding controllable flow control valve 43.

As mentioned above in relation to Fig. 2, the control unit 90 is generally in communication with the air compressors 32, 42 and further in communication with and configured to control the valves 33, 43. Each one of the controllable flow control valve 33 and the corresponding controllable flow control valve 43 is arranged and configured to control supply of compressed air 123 from the respective air compressors 32, 42 to any one of the respective fuel cells 37, 47 and the air-cooled brake resistor 62. By way of example, the controllable flow control valve 33 is arranged and configured to control supply of a portion of compressed air 123 from the air compressor 32 to the fuel cell 37 via the air fluid conduit 31. The controllable flow control valve 33 is also arranged and configured to control supply of a portion of compressed air 123 from the air compressor 32 to the air-cooled brake resistor 62 via the separate fluid conduit 39. The controllable flow control valve 33 is configured to regulate any one of a flow and pressure of the compressed air 123 from the air compressor 32. The corresponding controllable flow control valve 43 is arranged and configured in a similar vein as the valve 33, as is also described in relation to Fig. 2

In some examples, it may be sufficient that the valves 33, 43 are configured to open and close the passage to the respective separate conduit 39, 49 so as to permit or restrict a supply from the respective air compressor 32, 42 to the air-cooled brake resistor 62.

Each one of the controllable flow control valve 33 and the corresponding controllable flow control valve 43 is here controlled by the control unit 90 in response to receiving a control signal containing data indicative of a need for dissipating excessive electrical energy due to a braking demand of the vehicle 10. In addition, the control unit 90 is configured to control the valves 33, 43 in response to the control signal containing data indicative of a need for dissipating excessive electrical energy due to a braking demand of the vehicle 10. As described herein, the braking demand amounts to an energy dissipation situation where there is a need for managing excessive electrical energy generated. Such excessive electrical energy may occasionally be generated due to a predicted or prevailing braking operation.

The control signal is generally received at the control unit 90. Hence, the control unit 90 is configured to receive one or more control signals containing data indicative of at least a braking demand of the vehicle. The data comprises e.g. data of a wanted brake power. In response to the received one or more control signals, the control unit 90 is configured to operate the air compressors 32, 42 and the valves 33, 43, as described further herein. The other components of the system 10 may also be at least partly operated on the basis of the one or more control signals, as described herein.

The control unit 90 is here also configured to control distribution of compressed air 123 to the air-cooled brake resistor 62 and the fuel cells 37, 47 by controlling the valves 33, 43 in response to one or more control signals further containing data indicative of a fuel cell system load and/or power level. The data indicating the fuel cell system load is generally a measure of the current fuel cell system load. In other situations, the data indicating the fuel cell system load is a measure of a predicted fuel cell system load. Typically, the control unit 90 is configured to collectively control the valves 33, 43 on the basis of the load on both fuel cell systems 30, 40 and/or power levels of both fuel cell systems 30, 40.

The need for dissipating excessive electrical energy due to the braking demand of the vehicle 10 can be determined or estimated in several different manners. By way of example, the control unit 90 is configured to determine the need for dissipating excessive electrical energy due to the braking demand of the vehicle 10 by determining an amount of possible excessive electrical energy due to the braking demand. Typically, although strictly not required, the provision of determining an amount of possible excessive electrical energy from the braking event of the vehicle 10 is determined during a regenerative braking event. In other situations, the excessive electrical energy that needs to be dissipated from the system is predicted by the control unit 90 from an up-coming braking event of the vehicle 10 in beforehand based on one or more operational parameters, as mentioned herein.

The amount of possible excessive electrical energy from the braking event of the vehicle 10 that needs to be dissipated is favourably determined based on one or more operational parameters of the vehicle 10. By way of example, the operational parameter contains any one of the following data: data relating to an upcoming vehicle path, such as a downhill and uphill path; data relating to a change in vehicle speed, data relating to a change in acceleration, data relating to state-of-charge, SOC, of the electrical energy storage system, data relating to state of life of the fuel cells, characteristics of the electric machine, data relating to the weight of the vehicle 10, data indicating type of vehicle 10.

By way of example, the amount of possible excessive electrical energy is determined by estimating the total electric energy storage level of the vehicle 10. The total electrical energy level of the vehicle 10 here comprises different sets of data comprising one or more of the operational parameters. By way of example, the total electrical energy level includes data indicating state-of-charge SOC of the battery system of the vehicle 10. The total electrical energy storage level may also be determined on the basis of the state of life of the battery system and the state of life of the fuel cells. In addition, or alternatively, the total energy level may include current electrical energy need for powering auxiliaries of the vehicle, such as air conditioning systems and compressed air devices. In addition, or alternatively, the total electrical energy level may include predicted future electrical energy need of the vehicle 10 for a given time period. Such data can be gathered by various sensors (not shown) and the control unit 90, as is commonly known in the art. To this end, the total electrical energy level of the vehicle 10 may correspond to the prevailing SOC of the energy storage system, while also including predictive electrical energy demands for the vehicle for a given time period.

Fig. 4 schematically illustrates another example embodiment of the system 20. The system 20 of Fig. 4 generally comprises the components and features as described in relation to Fig. 2. One difference between the system in Fig. 4 and the system 20 described in Figs. 2 and 3 is that the separate fluid conduit 39 and the corresponding separate fluid conduit 49 are connected to an air storage tank 64. The air storage tank 62 is another example of a compressed air device. The air storage tank 64 is configured to store compressed air of high pressure. The air storage tank 64 is arranged and configured to receive and store the compressed air 123 from the compressors 32, 42.

As illustrated in Fig. 4, the air storage tank 64 is arranged downstream the separate fluid conduit 39 and the corresponding separate fluid conduit 49. The air storage tank 64 may be connected to the separate fluid conduit 39 and the corresponding separate fluid conduit 49 via a common inlet 64a of the air storage tank 64. In this design alternative, the separate fluid conduit 39 and the corresponding separate fluid conduit 49 intersect into a common conduit connecting the conduits 39, 49 to the inlet 64a of the air storage tank 64. In another arrangement of the system 20, the air storage tank 64 has two inlets 64a for connecting the separate fluid conduit 39 and the corresponding separate fluid conduit 49 to the air storage tank 64 (although not shown).

It should be readily appreciated that the air storage tank 64 is generally also configured to receive compressed air 123 and further transfer the compressed air. Thus, the air storage tank 64 here comprises the corresponding compressed air inlet 64a and a compressed air outlet 64b. The pressure of the compressed air may vary for different vehicles and fuel cell systems. The compressed air may be stored at a suitable pressure level in the air storage tank 64 depending on the available space in the vehicle and e.g. the size of the air storage tank 64. In general, if the system 20 provides for storing compressed air of a high pressure level, such storage may allow for reducing the size of the air storage tank or for storing a greater amount of compressed air.

The air storage tank 64 is thus arranged in fluid communication with the air compressor 32 via the separate fluid conduit 39 and the controllable flow control valve 33. Analogously, the air storage tank 64 is arranged in fluid communication with the corresponding air compressor 42 via the corresponding separate fluid conduit 49 and the corresponding controllable flow control valve 43.

Moreover, in Fig. 4, the controllable flow control valve 33 and the corresponding controllable flow control valve 43 are generally controlled in a similar vein as the valves 33, 43 described in relation to the example embodiments in Figs. 2 and 3. As such, the controllable flow control valve 33 and the corresponding controllable flow control valve 43 are collectively operable on the basis of the operational state of any one of the first and second fuel cell systems 30, 40. The system 20 in Fig. 4 is also controlled by the control unit 90. Hence, as mentioned in relation to Figs. 2 and 3, the control unit 90 is configured to control the valves 33, 43.

By way of example, although not illustrated, the air storage tank 64 is favourably arranged in fluid communication with any one of the inlets 31a, 41a of the compressors 32, 42 such that the compressed air stored in the air storage tank 64 may be used and directed from the air storage tank 64 to the compressors 32, 42 at high altitudes and/or during high power demands. The compressed air 123 from the compressors 32, 42 may generally be delivered and stored in the air storage tank 64 to be used for example at high altitudes when there is a high-power request from the fuel cells 37, 47. Accordingly, the air storage tank outlet 64b may be connected to one or more devices (not illustrated) operable on compressed air. This may also allow for recuperating energy more effectively without oversizing the battery/energy storage system of the vehicle.

To sum up, and as illustrated in Figs. 2 to 4, there is provided a system 20 for the vehicle 10 in Fig. 1. The system 20 comprises at least the first fuel cell system 30 and the second fuel cell system 40. The first fuel cell system 30 comprises the at least one fuel cell 37 and the air compressor 32. The air compressor 32 is disposed in the cathode side of the first fuel cell system 30 and arranged upstream the at least one fuel cell 37. Moreover, the first fuel cell system 30 comprises the controllable flow control valve 33 configured to control compressed air to any one the at least one fuel cell and a separate fluid conduit 39 connected to any one of a compressed air device, such as the brake resistor 62 (Fig. 3) or the air storage tank 64 (Fig. 4), and the exhaust outlet 60 (Fig. 2).

Further, the second fuel cell system 40 comprises the at least one corresponding fuel cell 47 and the corresponding air compressor 42. The corresponding air compressor 42 is disposed in the cathode side of the second fuel cell system 40 and arranged upstream the at least one corresponding fuel cell 47. The second fuel cell system 40 further comprises the corresponding controllable flow control valve 43 configured to control compressed air to any one of the at least one corresponding fuel cell and the corresponding separate fluid conduit 49 connected to any one of the compressed air device, such as the brake resistor 62 (Fig. 3) or the air storage tank 64 (Fig. 4), and the exhaust outlet 60 (Fig. 2).In this context, a compressed air device refers to a component or system that is configured to utilize compressed air and/or store compressed air. The brake resistor is utilizing compressed air for cooling purposes, i.e. the compressed air is supplied to cool the brake resistor during operation. The air storage tank is configured to store compressed air. Other compressed air device may also be conceivable, such as a pneumatic device.

In addition, the controllable flow control valve 33 and the corresponding controllable flow control valve 43 are operable in response to the operational state of any one of the first and second fuel cell systems 30, 40.

Although not depicted in Figs. 2 to 4, it should also be readily appreciated that the system 20 may comprise one or more temperature sensors and pressure sensors to provide further control data for the control unit 90 and the system 20. The application of such sensors in a system 20 is generally provided and arranged in view of the type of fuel cell systems and vehicle, as is commonly known in the art. The fuel cell system may also contain temperature sensors in the fuel cell, or in a housing of the fuel cell. Hereby, the temperature level of the fuel cell can be determined. A temperature sensor may also be arranged in the brake resistor to allow for a precise cooling control of the resistor.

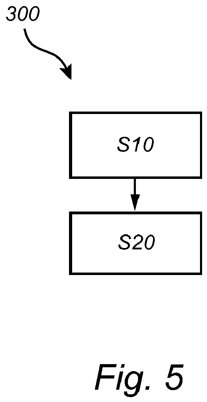

The control unit 90 of the system 20 is configured to implement a method 300 according to the following operations, which is also illustrated in Fig. 5. The method may generally be implemented by a processing circuitry of the control unit 90. Hence, turning now to an example of a braking energy management strategy for the vehicle 10, including a number of operations of a method for the system 10 so as to dissipate excessive energy generated e.g. from a regenerative braking event of the vehicle 10.

The method 300 is intended for controlling the system 20 of the vehicle 10. The method comprises a step of receiving S10 a control signal indicative of an operational state of any one of the first and second fuel cell systems. In addition, the method comprises a step of collectively operating S20 the controllable valve 33 and the corresponding controllable valve 43 on the basis of an operational state of any one of the first and second fuel cell systems. Hence, the control unit 90 is configured to be in communication with the controllable valve 33 and the corresponding controllable valve 43.

The method can control the system 20 and the valves 33, 43 in several different ways by means of the control unit 90, as described herein.

The control unit 90 may also be in communication with the fuel cell systems 30, 40, the fuel cell(s) 37, 47, the compressors 32, 42, the compressed air device, such as the air-cooled brake resistor and any other components, such as the air storage tank 64 of the vehicle 10. By way of example, the control unit 90 is configured to control one or more valve positions of the controllable valves 33, 43, the FC load on the fuel cell(s) 37, 47, the speed of the compressors 32, 42, the brake power, and optionally the compressed air device, such as current and temperature of the air-cooled brake resistor 62.

The control unit 90 may likewise be configured to control these components in response to any one of an operating mode of the vehicle and a power demand from the vehicle 10.

The control unit 90 may also be operable to control any one of the above-mentioned valves 33, 43 in response to a received control signal indicating the activation state of the fuel cell systems 30, 40. Each one of the above-mentioned valves may be controllable in a coordinated manner by the control unit 90 in response to the operating mode of the vehicle. Hence, while the control unit 90 is arranged in communication with the controllable valves 33, 43 so as to control the controllable valves 33, 43 based on the control signal, the control unit 90 may also be connected to another vehicle control system for receiving signals indicative of e.g. a current operating mode for the vehicle.

According to one example operation of the system 20, the control unit 90 is configured to control the valves 33, 43 to direct compressed air to the compressed air device, such as the air-cooled brake resistor 62, in response to the determined need for dissipating excessive electrical energy, and wherein control unit 90 is further configured to vary the level of the distribution of compressed air to the fuel cells 37, 47 by controlling the one or more of the valves 33, 43 in response to a change in the fuel cell system load of one or more of the fuel cell systems 30, 40. In this context, a change in the fuel cell system load may refer to change from a low load to an intermediate load, from an intermediate load to a high load, from a high load to an intermediate load, from an intermediate load to a low load, from a high load to a low load and/or from a low load to a high load.

By way of example, when the vehicle 10 performs a braking operation and the system 20 is used to dissipate energy via, or to, the compressed air device, such as the air-cooled brake resistor 62, the fuel cells 37, 47 of the fuel cell systems 30, 40 normally operate at idle conditions or at conditions to produce minimum power; i.e. the fuel cells may generally only demand low flow and pressure from the air compressor 32, 42. At the same time, i.e. during the given braking operation, a high flow of compressed air and pressure is generally desired for the resistor cooling. Therefore, the control unit 90 is here operated to collectively control the valves 33, 43 to distribute compressed air according to the given braking demand and the fuel cell load on the fuel cells 37, 47. However, during normal operation of the vehicle 10, where there is no electrical energy dissipation in the brake resistor 62, there is no need for a flow of compressed air 123 from the air compressors 32, 42 to the brake resistor 62. The above is merely one example of a number of options on how the control unit 90 may control the valves 33, 43 to distribute compressed air 123 to the compressed air device, such as the brake resistor 62, and the fuel cells 37, 47.

A required amount of compressed air for one of the fuel cell system is e.g. determined on the basis of a power request (current or predicted), through look-up tables and/or by other models stored in the control unit 90. By comparing the required amount of compressed air for a given fuel cell system with predicted generated excess energy from the braking event, the control unit 90 is configured to determine the level of energy that needs to be absorbed in the system.

Subsequently, on the basis of the determined required amount of compressed air to the fuel cell system(s) and the above comparison, the control unit 90 controls one of the compressors (or both) to be ramped up using the excessive electrical energy. The excess air flow produced due to ramping of the compressor can be directed to the compressed air device and the exhaust. Thus, the valves 33, 43 are here controlled in response to the estimated required amount of compressed air that needs to be supplied to the fuel cell system(s) and to the compressed air device. In other words, the control unit 90 is configured to control the valves 33, 43 based on the current/predicted power request on the fuel cell system(s) and in view of how much braking energy that needs to be absorbed by the compressors of the fuel cell systems.

Favourably, the control unit is configured to prioritize distributing compressed air 123 to the fuel cells 37, 47 on the basis of the data indicating the fuel cell system load.

By way of example, valves 33, 43 are collectively controlled by the control unit 90 to distribute a substantial amount of produced compressed air to the fuel cells 37, 47 when, or if, the fuel cell system load is above a threshold value, e.g. indicating an intermediate load, and subsequently distribute any remaining produced compressed air 123 to the compressed air device, such as the air-cooled brake resistor 62 or the air storage tank 64. It may be noted that the need for distributing compressed air 123 to the air-cooled brake resistor 62 may generally only be present when the brake resistor is active and requires cooling.

The control unit 90 is here also configured to determine a maximum operational state of the air compressors 32, 42 and collectively control the valves 33, 43 to reduce the distribution of the compressed air 123 to the compressed air device, such as the air-cooled brake resistor 62, when, or if, the air compressors 32, 42 reaches its maximum operational state.

In addition, or alternatively, the control unit 90 is configured to control distribution of compressed air 123 to the compressed air device, such as the air-cooled brake resistor 62 and the fuel cells 37, 47 by collectively controlling the valves 33, 43 only to distribute compressed air 123 to the fuel cells 37, 47 when the control signal indicates a non-braking demand and a predicted or present fuel cell system load. In this situation, the air compressors 32, 42 are operated for distributing compressed air 123 only to the fuel cells 37, 47, and on the basis of the determined fuel cell system load.

In addition, or alternatively, the control unit 90 is configured to control distribution of compressed air 123 to the compressed air device, such as the air-cooled brake resistor 62 and the fuel cells 37, 47 by controlling the valves 33, 43 only to distribute compressed air 123 to the compressed air device, such as the brake resistor 62 when the control signal indicates a braking demand and no load on the fuel cell systems 30, 40. In this situation, the air compressors are operated for distributing compressed air 123 only to the compressed air device, such as the brake resistor 62, and on the basis of the determined braking demand.

The control unit 90 is favourably also configured to deactivate the air compressors 32, 42 if the control signal indicates non-braking demand and no fuel cell system load.

It should be noted that in the above description, the various states and loads of the fuel cell systems, i.e. the high load, intermediate load, low load and no load, are generally determined by using thresholds levels. Such thresholds level can be predetermined thresholds or dynamically defined thresholds. By way of example, such thresholds levels can be derivable from a look-up table stored in a memory of the control unit 90. Other options are also conceivable depending on type of vehicle, system and control system.

The control unit 90 generally comprises the processing circuitry 92. In other words, the processing circuitry 92 of the control unit 90 is configured to receive a control signal from the vehicle 10. The control signal is indicative of a request for dissipating electrical energy from the system 20 due to a braking demand for the vehicle. By way of example, in operation of the vehicle 10, the processing circuitry 92 of the control unit 90 determines a level of electric energy dissipation for the vehicle, i.e. a level of electric energy that should be dissipated from the brake resistor since the traction electric machine being operated in its generator mode during braking may not be suitable to supply such power to the battery any longer. The level of electric energy dissipation may hence be a difference between the level of electric energy generated during the regenerative braking and the current electric charging capacity of the battery. If the electric traction machine 82 is able to handle, i.e. receive and be operated by, electric energy corresponding to the level of electric power dissipation, all excess electric power, i.e. the generated power not being supplied to the battery for charging, may be supplied to the electric motors 32a, 42a of the first and second fuel cell systems 30, 40.

The control unit 90 may for example be an electronic control unit (ECU) comprised with the vehicle 10. The control unit 90 generally comprises the processing circuitry, a control circuitry or the like. However, the control unit 90 may likewise be provided by a number of sub-control units (not illustrated), wherein each one of the control units may generally comprise a corresponding control circuitry, processor or the like. The control unit 90 may include one or more hardware components for conducting data or signal processing or for executing computer code stored in memory. The memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processing circuitry, control circuitry or processor (e.g. via a circuit or any other wired, wireless, or network connection) and includes computer code for executing one or more processes described herein. The control unit 90 may communicate with the components of the system 20, including e.g. the valves 33, 43 and compressor 32, 42, either by wire or by a wireless network, as is commonly known in the art.

Each one of the controllable valves 33, 43 is favourably actuated by a corresponding solenoid corresponding to a valve actuator, as is commonly known in the art of control valves for fluids. However, many types of actuation are available, such as electric, pneumatic and hydraulic actuation of the controllable valves in response to the control signal from the control unit 90.

Thanks to the system 20 as described above, it becomes possible to provide a dynamic, yet efficient and versatile way of managing electrical energy dissipation. By way of example, the system 20 with the valves 33, 43 contributes to a dynamic control of distributing compressed air 123 from the compressors 32, 42 to the compressed air device 62, 64 (e.g. brake resistor and/or air storage tank) and/or the exhaust conduit 60 so as to better managing excessive electrical energy, while ensuring an adequate operation of the fuel cells 37, 47 of each fuel cell system 30, 40. This is provided at least partly by supplying compressed air 123 to the fuel cells 37, 47 on the basis of predicted and/or current load on the fuel cell systems 30, 40. In particular, by the provision of operating the valves 33, 43 on the basis of the operational state of any one of the first and second fuel cell systems, the controllable valves 33, 43 are capable of controlling supply of compressed air 123 such that one of the corresponding compressors, e.g. the compressor 32, supply compressed air 123 to the corresponding at least one fuel cell, e.g. the fuel cells 37, and another one of the compressors, e.g. compressor 42, supply compressed air 123 to any one of the compressed air device 62, 64 / exhaust outlet 60.

The system 20 may also allow for recuperating energy more effectively without oversizing the battery/energy storage system of the vehicle. Hence, according to at least one embodiment, the compressors 32, 42 are arranged to operate from recuperation of brake energy from a braking event. As such, each one of the compressors 32, 42 is arranged to absorb energy generated from the braking event.

It is to be understood that the present disclosure is not limited to the embodiments described above and illustrated in the drawings; rather, the skilled person will recognize that many changes and modifications may be made within the scope of the appended claims. By way of example, although the Figures illustrate a system with a dual fuel cell system, the system may include additional fuel cell systems according to one of the first and second fuel cell systems, each one of the fuel cell system being connectable to a separate conduit, exhaust outlet, a compressed air device, a brake resistor, an air storage tank, a pneumatic device and the like.

## Claims

1. A system (20) for a vehicle (10), said system comprising at least a first fuel cell system (30) and a second fuel cell system (40),
said first fuel cell system having at least one fuel cell (37) and a compressor (32) disposed in a cathode side of the first fuel cell system, said compressor being arranged upstream the at least one fuel cell; wherein the first fuel cell system comprises a controllable flow control valve (33) configured to control supply of compressed air from said compressor to any one of the at least one fuel cell and a separate fluid conduit (39) connectable to any one of a compressed air device and an exhaust outlet;
said second fuel cell system having at least one corresponding fuel cell (47) and a corresponding compressor (42) disposed in a cathode side of the second fuel cell system, said corresponding compressor being arranged upstream the at least one corresponding fuel cell; wherein the second fuel cell system comprises a corresponding controllable flow control valve (43) configured to control supply of compressed air from said corresponding compressor to any one of the at least one corresponding fuel cell and a corresponding separate fluid conduit (49) connectable to any one of the compressed air device and the exhaust outlet; and
wherein the controllable flow control valve and the corresponding controllable flow control valve are operable responsive to an operational state of any one of the first and second fuel cell systems.

2. System according to claim 1, wherein the controllable flow control valve and the corresponding controllable flow control valve are operable in response to a change in any one of a load on, or power level of, the at least one fuel cell of the first fuel cell system and a load on, or power level of, the at least one corresponding fuel cell of the second fuel cell system.

3. System according to claim 1 or claim 2, wherein the controllable flow control valve and the corresponding controllable flow control valve are operable to control supply of compressed air to the at least one fuel cell and the at least one corresponding fuel cell, respectively, when said at least one fuel cell of said first cell system and said at least one corresponding fuel cell of the second fuel cell system are operated to deliver power to the vehicle.

4. System according to claim 3, wherein, when said at least one fuel cell of said first cell system and said at least one corresponding fuel cell of the second fuel cell system are both operated to deliver power to the vehicle, said controllable flow control valve and said corresponding controllable flow control valve are further operable to control supply of compressed air to the separate fluid conduit and the corresponding separate fluid conduit if the first and second fuel cell systems are operated at power levels below a threshold level.

5. System according to any one of the preceding claims, wherein, when said at least one fuel cell of said first cell system is operated in a non-operational state and the at least one corresponding fuel cell is operated to deliver power to the vehicle, the controllable flow control valve is operable to control supply of compressed air to the separate fluid conduit, whilst the corresponding controllable flow control valve is operable to control supply of compressed air to the at least one corresponding fuel cell of the second fuel cell system.

6. System according to any one of the preceding claims, wherein the controllable flow control valve and the corresponding controllable flow control valve are operable to control supply of compressed air to the separate fluid conduit and the corresponding separate fluid conduit, respectively, when said at least one fuel cell of said first cell system and said at least one corresponding fuel cell of the second fuel cell system are operated in corresponding non-operational state.

7. System according to any one of the preceding claims, wherein the controllable flow control valve and the corresponding controllable flow control valve are operable to control supply of compressed air to the separate fluid conduit and the corresponding separate fluid conduit, respectively, in response to a determined need for dissipating electrical energy.

8. System according to any one of the preceding claims, wherein at least one of the separate fluid conduit and the corresponding separate fluid conduit is connected to a compressed air device in the form of a brake resistor.

9. System according to any one of the preceding claims, wherein at least one of the separate fluid conduit and the corresponding separate fluid conduit is connected to a compressed air device in the form of a compressed air storage tank.

10. System according to any one of the preceding claims, wherein the controllable flow control valve and the corresponding controllable flow control valve are controllable diverting three-way flow control valves.

11. System according to any one of the preceding claims 1 to 9, wherein the controllable flow control valve and the corresponding controllable flow control valve are controllable selection valves, respectively, the controllable selection valve being configured to selectively direct compressed air to the at least one fuel cell or the separate fluid conduit, and the corresponding controllable selection valve being configured to selectively direct compressed air to the at least one corresponding fuel cell or the corresponding separate fluid conduit.

12. A method for controlling a system (20) of a vehicle (10), said system comprising at least a first fuel cell system (30) and a second fuel cell system (40), said first fuel cell system having at least one fuel cell (37) and a compressor (32) disposed in a cathode side of the first fuel cell system and arranged upstream the at least one fuel cell; wherein the first fuel cell system further comprises a controllable flow control valve (33) configured to control supply of compressed air from the compressor to any one of the at least one fuel cell and a separate fluid conduit (39) connectable to any one of a compressed air device and an exhaust outlet; said second fuel cell system having at least one corresponding fuel cell (47) and a corresponding compressor (42) disposed in a cathode side of the second fuel cell system and arranged upstream the at least one corresponding fuel cell; wherein the second fuel cell system further comprises a corresponding controllable flow control valve (43) configured to control supply of compressed air from the corresponding compressor to any one of the at least one corresponding fuel cell and a corresponding separate fluid conduit (49) connectable to any one of the compressed air device and the exhaust outlet; said method comprising:
- receiving a control signal indicative of an operational state of any one of the first and second fuel cell systems; and
- operating the controllable flow control valve and the corresponding controllable flow control valve in response to the received control signal indicative of the operational state of any one of the first and second fuel cell systems.

13. A computer program comprising program code means for performing the steps of claim 12 when said program is run on a computer.

14. A computer readable medium carrying a computer program comprising program means for performing the steps claim 12 when said program means is run on a computer.

15. A vehicle (10) comprising a system according any one of the claims 1 to 11.
